# EUROPÄISCHE PATENTANMELDUNG

(11) **EP 1 188 938 A1**
(43) Veröffentlichungstag der Anmeldung: **20.03.2002**
(21) Anmeldenummer: 01121426.9
(22) Anmeldetag: 07.09.2001
(51) Int. Cl.: F16B 25/00, F16B 33/02

(54) **Gewindeformende Schraube, insbesondere Betonschraube**

(30) Priorität: 13.09.2000 DE 10045274
(71) Anmelder: TOGE-Dübel A. Gerhard KG, 90431 Nürnberg (DE)
(72) Erfinder: Gerhard, Anton,, 90427 Nürnberg (DE)
(74) Vertreter: Rau, Manfred, Dr. Dipl.-Ing.

(57) **Zusammenfassung**

Eine gewindeformende Schraube, insbesondere Betonschraube, weist einen Kern (4) mit einer Mittel-Längs-Achse (8) auf, auf dem ein Gewinde (3) ausgebildet ist. Das Gewinde ist mit einer sich über den Außenumfang (17) erstreckenden, radial zur Mittel-Längs-Achse (8) geschwungenen, stetigen Wellung (14) mit einander abwechselnden Wellentälern (15) und Wellenbergen (16) versehen. Diese Wellung bildet einen gewindeformenden Abschnitt.

## Beschreibung

Die Erfindung betrifft eine gewindeformende Schraube, insbesondere Betonschraube, nach dem Oberbegriff des Anspruches 1.

Aus der WO 98/04942 (entsprechend US-Patent 6,086,302) ist eine derartige Betonschraube bekannt, die im Außenumfang des Gewindes etwa dreieckförmige, nach außen offene Schneiden aufweist. Die bekannte Betonschraube eignet sich sehr gut dafür, in ein in Beton gebohrtes Bohrloch unter Selbstschneiden eines Muttergewindes in Beton eingedreht zu werden. Zur Erhöhung des Auszugswertes muß die Tiefe des Bohrloches vergrößert werden; die Erhöhung der Auszugswerte kann nicht durch Reduktion der Steigung des Gewindes erreicht werden. Wenn wiederum auf diese Weise hohe Auszugswerte erreicht werden sollen, dann wird im Verlauf des Einschraubens der Schraube das zum Einschrauben erforderliche Drehmoment zu groß.

Bei gewindeformenden Schrauben ist beispielsweise aus der EP 0 553 907 B1 und der US 3,530,760 bekannt, an einem im Querschnitt dreieckförmigen Gewinde der Schraube in Abständen auf dem Außenumfang des Gewindes Abflachungen vorzunehmen. Hierdurch soll das Einschrauben der Schraube in duktiles Material, wie verhältnismäßig weiche Metalle, erleichtert werden.

Der Erfindung liegt die Aufgabe zugrunde, eine gewindeformende Schraube, insbesondere Betonschraube, der gattungsgemäßen Art so auszugestalten, daß einerseits sehr hohe Auszugswerte und andererseits möglichst niedrige Drehmomente beim Einschrauben der Schraube in ein Bohrloch erreicht werden.

Diese Aufgabe wird erfindungsgemäß durch die Merkmale im Kennzeichnungsteil des Anspruches 1 gelöst. Durch die im wesentlichen kantenfreie, radial zur Mittel-Längs-Achse gewellte bzw. geschwungene Ausgestaltung des Gewindes im Bereich seines Außenumfangs wird erreicht, daß das Formen des Muttergewindes bzw. Innengewindes im festen Material, in der Regel also Beton, durch eine Kombination aus Zermahlen und Verdichten des Materials erfolgt, wobei in den Wellentälern keine direkte Reibung zwischen dem Gewinde und dem Material stattfindet, was zu einer Reduktion der zum Eindrehen erforderlichen Drehmomente führt. Das Muttergewinde bzw. Innengewinde im Material wird sehr gleichmäßig ausgebildet, so daß eine ausgeprägt flächige Anlage zwischen Gewinde und dem festen Material erfolgt. Da darüber hinaus das Material im Bereich des Gewindes verdichtet ist, ergeben sich insgesamt außerordentlich hohe Auszugswerte.

Zahlreiche vorteilhafte und z.T. erfinderische Ausgestaltungen ergeben sich aus den Unteransprüchen.

Weitere Merkmale, Vorteile und Einzelheiten der Erfindung ergeben sich aus der nachfolgenden Beschreibung eines Ausführungsbeispiels anhand der Zeichnung. Es zeigt
- Fig. 1: eine Schraube gemäß der Erfindung in Längs-Draufsicht,

- Fig. 2: einen Querschnitt durch die Schraube in stark vergrößerter Darstellung,
- Fig. 3: einen Teil-Längsschnitt durch die Schraube gemäß der Schnittlinie III-III in Fig. 2, ebenfalls in gegenüber Fig. 1 stark vergrößerter Darstellung,
- Fig. 4: einen Querschnitt durch eine leicht abgewandelte Ausführungsform der Schraube in stark vergrößerter Darstellung und
- Fig. 5: einen Teil-Längsschnitt durch die Schraube gemäß der Schnittlinie V-V in Fig. 4.

Die in der Zeichnung dargestellte Schraube weist einen zylindrischen, gewindefreien Schaft 1 mit einem Kopf 2 auf. An den Schaft 1 schließt sich - abgewandt vom Kopf 2 - ein mit einem Gewinde 3 versehener Kern 4 an. Die Schraube ist einstückig ausgebildet.

Das Gewinde 3 ist als selbstschneidendes Gewinde ausgebildet, mittels dessen sie in ein Bohrloch 5 in sehr festem Material, beispielsweise Beton 6, eingeschraubt werden kann. Der Durchmesser D_{B} des Bohrlochs 5 ist um einige wenige Zehntel Millimeter, in der Regel 0,2 bis 0,3mm größer als der Durchmesser D_{S} des Schaftes 1. Die Bohrloch-Durchmesser D_{B} sind genormt. Die für derartige Schrauben in Betracht kommenden Bohrloch-Nenn-Durchmesser D_{B} sind gemäß den geltenden Normen 5; 6; 8; 10; 12; 14; 16 mm.

Der Durchmesser D_{K} des ebenfalls zylindrischen Kerns 4 ist kleiner als D_{B}, und zwar um etwa0,8 bis 1,2 mm und bevorzugt etwa 1 mm.

Das Gewinde 3 läuft zum Einschraubende 7 des Kerns 4 hin um die Hälfte bis Dreiviertel des Umfangs des Kerns in den Kern 4 aus bzw. es steigt vom Einschraubende 7 her aus dem Kern 4 über die Hälfte bis Dreiviertel des Umfangs auf den Außendurchmesser D_{G} des Gewindes 3 an. Das Gewinde 3 hat in seinem radial zur Mittel-Längs-Achse 8 befindlichen Bereich im wesentlichen zueinander parallele Flanken 9, 10, die aus fertigungstechnischen Gründen radial von innen nach außen höchstens geringfügig aufeinander zu geneigt sind. Am Übergang zum Kern 4 weist das Gewinde 3 einen Fußabschnitt 11 auf, der aus den Flanken 9, 10 in den Kern 4 übergehende Schrägflächen 12, 13 aufweist. Der Schrägungswinkel a liegt im Bereich von 10° bis 40° und bevorzugt im Bereich von 20° bis 30°. Der Fußabschnitt 11 kann mit seinen Schrägflächen 12, 13 geringfügig im Beton 6 angeordnet sein.

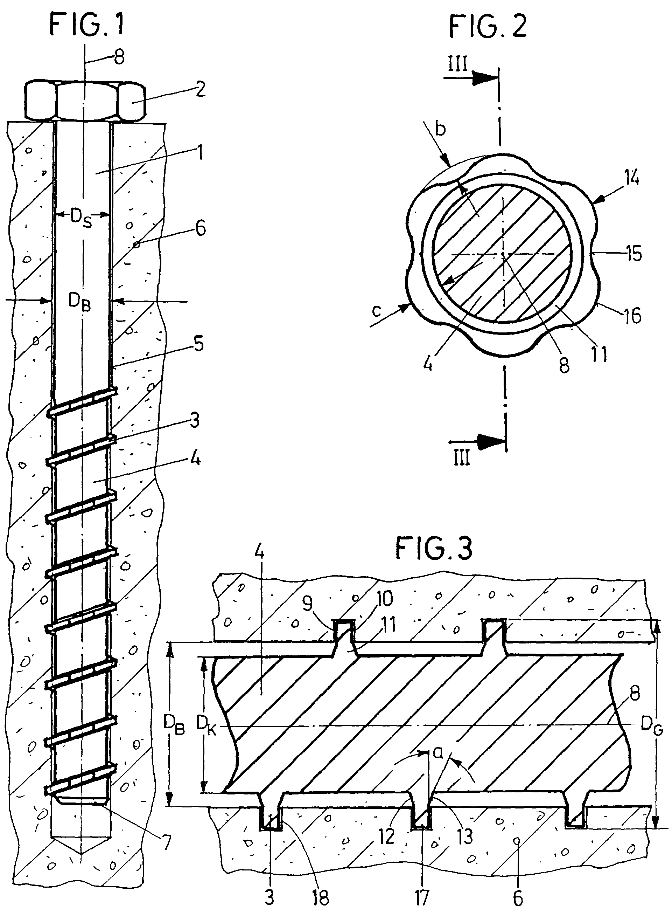

Wie aus Fig. 2 hervorgeht, ist das Gewinde 3 in seinem äußeren, mit den Flanken 9, 10 versehenen Bereich des Umfangs gewellt ausgebildet. Es ist also mit einer gleichsam radial zur Achse 8 schwingenden Wellung 14 versehen, die aus einander abwechselnden Wellentälern 15 und Wellenbergen 16 besteht. Der durch die Wellenberge 16 und Wellentäler 15 konturierte Außenumfang 17 des Gewindes 3 verläuft stetig, also frei von Kanten oder Unstetigkeitsstellen. Die maximale Höhe b der Wellenberge 16 über den Wellentälern 15 beträgt etwa 30 bis 50% der maximalen Höhe c des Gewindes 3 über dem Kern 4. Die Gewindehöhe c beträgt 1,6 bis 2,0 mm und vorzugsweise 1,65 bis 1,85 mm bei Bohrloch-Durchmessern D_{B} von 8 bis 16 mm. Die Gewindehöhe c beträgt 1,0 bis 1,6 mm bei Bohrloch-Durchmessern D_{B} von 5 und 6 mm.

Für die Zahl der aus je einem Wellental 15 und einem Wellenberg 16 bestehenden Wellungs-Einheiten pro 360° Außenumfang 17 des Gewindes 3 gilt - bezogen auf den Bohrloch-Nenn-Durchmesser D_{B} - die folgende Tabelle.

| Bohrloch-Nenn-Durchmesser D_{B}: | Zahl der Wellungs-Einheiten pro 360° Außenumfang: | |
|---|---|---|
| | Bereich: | Bevorzugte Zahl: |
| 5 mm | 3-5 | 4 |
| 6mm | 4-6 | 5 |
| 8mm | 5-7 | 6 |
| 10 mm | 6-8 | 7 |
| 12 mm | 6-8 | 7 |
| 14 mm | 7-9 | 8 |
| 16 mm | 8-10 | 9 |

Wie sich aus der vorstehenden Tabelle ergibt, nimmt die Zahl der Wellungen von vier bis neun pro 360° Außenumfangswinkel, also etwa stetig mit dem Bohrloch-Durchmesser D_{B} und somit auch etwa mit dem Gewinde-Durchmesser D_{G} zu.

Beim Einschrauben der Schraube in das Bohrloch 5 schneidet sich das Gewinde 3 gleichsam ein Muttergewinde 18 in den Beton 6. Die Wellung 14 des Gewindes 3 übt diesen Formungsvorgang aus, und zwar durch eine Kombination aus Zermahlen und Verdichten des Betons 6. Es erfolgt also eine Mischung aus Furchen und Schieben. Wie sich gezeigt hat, trägt das Gewinde 3 gleichmäßiger, als wenn das Muttergewinde 18 mittels am Gewinde 3 ausgebildeter Schneiden geschnitten worden wäre. Dadurch wird bewirkt, daß die beschriebenen Schrauben höhere Auszugswerte haben als Schrauben gleichen Kern-Durchmessers D_{K} und gleicher Gewindehöhe c, bei denen das Gewinde mit das Muttergewinde 18 schneidenden Schneiden ausgebildet ist.

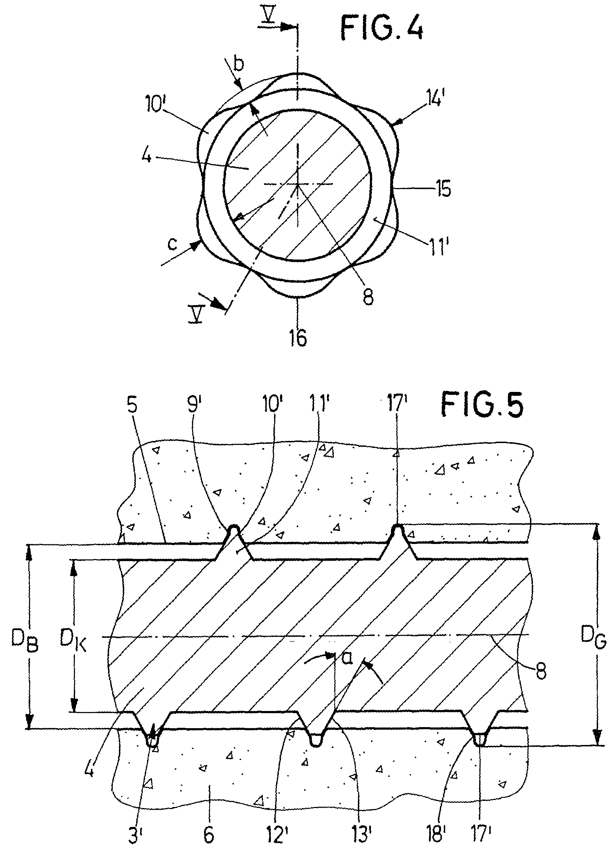

Die Fig. 4 und 5 zeigen eine Ausgestaltung der Schraube, bei der der Fußabschnitt 11' mit seinen Schrägflächen 12', 13' geringfügig im Beton 6 angeordnet ist, wie es oben bereits angesprochen wurde. Identische Teile werden mit identischen Bezugsziffern bezeichnet, während leicht abgewandelte Teile mit derselben Bezugsziffer wie in den Fig. 1 bis 3 bezeichnet werden, die jedoch mit einem hochgesetzten Strich versehen sind.

Der Fußabschnitt 11' ist ausgeprägter ausgebildet und erstreckt sich - wie insbesondere Fig. 4 zu entnehmen ist - bis an die Wellentäler 15 der Wellung 14'. Deren Flanken 9', 10' weisen einen geringeren axialen Abstand voneinander auf als die Flanken 9, 10 beim Ausführungsbeispiel nach den Fig. 1 bis 3. Der Schrägungswinkel an der Schrägflächen 12', 13' beträgt in diesem Fall 30°. Die Schrägflächen 12', 13' befinden sich in ihrem der Wellung 14 benachbarten Bereich im Beton 6. Auch soweit die Schrägflächen 12', 13' das Muttergewinde 18' im Beton 6 formen, findet ein kombinierter Reib- und Verdicht-Effekt statt.

## Patentansprüche

1. Gewindeformende Schraube, insbesondere Betonschraube,
- mit einem im wesentlichen zylindrischen Kern (4) mit einer Mittel-Längs-Achse (8),
- mit einem einstückig mit dem Kern (4) ausgebildeten Gewinde (3, 3') mit Flanken (9, 10, 9' 10') und
- mit einem im Bereich des Außenumfangs (17, 17') des Gewindes (3, 3') ausgebildeten gewindeformenden Abschnitt,
**dadurch gekennzeichnet,**
**daß** der gewindeformende Abschnitt als eine sich über den Außenumfang des Gewindes (3, 3') erstreckende, radial zur Mittel-Längs-Achse (8) geschwungene, stetige Wellung (14, 14') mit einander abwechselnden Wellentälern (15) und Wellenbergen (16) ausgebildet ist.

2. Schraube nach Anspruch 1, **dadurch gekennzeichnet,**
**daß** für die maximale Höhe b der Wellenberge (16) über den Wellentälern (15) im Vergleich zur maximalen Höhe c des Gewindes (3, 3') über dem Kem (4) gilt: 0,3 c = b = 0,5 c.

3. Schraube nach Anspruch 1 oder 2, **dadurch gekennzeichnet,**
**daß** für die maximale Höhe c des Gewindes (3, 3') über dem Kern (4) bezogen auf genormte Bohrloch-Nenn-Durchmesser D_{B} gilt:
1,0 mm c = 1,6 mm bei D_{B} = 5 oder 6 mm und
1,6 mm = c = 2,0 mm bei D_{B} = 8 mm bis 16 mm.

4. Schraube nach Anspruch 3, **dadurch gekennzeichnet, daß** gilt:
1,65 mm = c = 1,85 mm bei D_{B} = 8 bis 16 mm.

5. Schraube nach einem der Ansprüche 1 bis 4, **dadurch gekennzeichnet, daß** für den Durchmesser D_{K} des Kerns (4) in bezug auf den genormten Durchmesser D_{B} des Bohrlochs (5) gilt: D_{B} - 1,2 ≤ D_{K} ≤ D_{B} - 0,8 [mm] und bevorzugt D_{K} ≅ D_{B} - 1 [mm].

6. Schraube nach einem der Ansprüche 1 bis 5, **dadurch gekennzeichnet, daß** die Flanken (9, 10, 9', 10') im wesentlichen zueinander parallel ausgebildet sind.

7. Schraube nach einem der Ansprüche 1 bis 6, **dadurch gekennzeichnet, daß** das Gewinde (3, 3') im Übergangsbereich zum Kern (4) mit einem sich zum Kern (4) hin verbreiternden Fußabschnitt (11, 11') versehen ist, der durch Schrägflächen (12, 13, 12', 13') mit einem Schrägungswinkel a begrenzt ist, wobei für den Schrägungswinkel a gilt:
10°= a = 40° und bevorzugt 20°= a = 30°.

8. Schraube nach einem der Ansprüche 1 bis 7, **dadurch gekennzeichnet, daß** die Zahl der aus je einem Wellental (15) und jeweils einem Wellenberg (16) gebildeten Wellungs-Einheiten über eine volle 360°-Erstreckung des Außenumfangs (17, 17') des Gewindes (3, 3') drei bis zehn für einen genormten Bohrloch-Durchmesser D_{B} = 5 mm bis D_{B} = 16 mm mit etwa gleichmäßiger Zunahme beträgt. ist.
